# EUROPEAN PATENT APPLICATION

(11) **EP 2 767 936 A1**
(43) Date of publication of application: **20.08.2014**
(21) Application number: 13155454.5
(22) Date of filing: 15.02.2013
(51) Int. Cl.: G06Q 10/06

(54) **A catalogue manager and methods for managing subscriptions**

(71) Applicant: Fujitsu Limited, Kawasaki-shi, Kanagawa 211-8588 (JP)
(72) Inventor: Jäger, Mike, 3052 Zollikofen (CH)
(74) Representative: Epping - Hermann - Fischer

(57) **Abstract**

The invention relates to a catalogue manager for managing subscriptions to services. The catalog manager comprises at least one first database entry comprising data for a service description of a service to be offered and at least one first catalogue entry associating the first database entry with a set of services offered by a first link of a value chain. The catalog manager further comprises at least one second database entry comprising a modifiable copy of the data for the service description of the service to be offered, at least one reference associating the second and the first database entry, and at least one second catalogue entry associating the second database entry with a set of services offered by a second link of the value chain.

The invention further relates to a method for offering a service, a method for subscribing to a service, a non-transitive storage medium comprising a computer program and a business method for selling Software as a Service product on a plurality of marketplaces.

## Description

### Background of the Invention

The present invention relates to systems, devices and operating and business methods for managing subscriptions to services. In particular, the present invention relates to a catalogue manager for managing subscriptions to services, a method for offering a service, a method for subscribing to a service, a non-transitive storage medium comprising a computer program and a business method for selling Software as a Service product on a plurality of marketplaces.

Software as a Service (SaaS) is a software delivery model in which software and associated data are hosted on computing resources available over a data network. Often, the resources necessary to provide the software and associated data are provided remotely over the Internet. This process is also often described as "cloud computing". However, similar data models and system architectures may be used in a company internal network. Software provided by means of the SaaS delivery model is typically accessed by end users using a thin-client or a web browser of a desktop computer.

The SaaS software delivery model offers distinct advantages to users, service providers as well as developers of software. From the users' perspective, there is no need to provide IT resources and buy specialized software products in order to perform specialised functions, such as customer relationship management, information system management, enterprise resource planning, invoicing, human resource management, content management and service desk management. This often frees individuals and organization from considerable investment and also frees internal resources to concentrate on the core business activities. From the perspective of the service providers, the offering of SaaS over open data networks, such as the Internet, often enables them to offer their services to a wider audience. For example, while traditionally software vendors have been restricted to local distribution channels, now most software can be offered to a global clientele, creating business opportunities to the service provider. At the same time, the service oriented delivery model ensures them regular revenue rather than relatively short-termed revenues at the time of sale. From the perspective of developers, in particular of so called independent software vendors (ISV), the rise of the SaaS delivery model also offers them the opportunity to provide a specialized application to a wider market. At the same time, aspects such as user management, authentication, infrastructure provisioning, and accounting can be outsourced to a platform or service provider, leaving the developer to concentrate on the implementation of the actual business application to be provided.

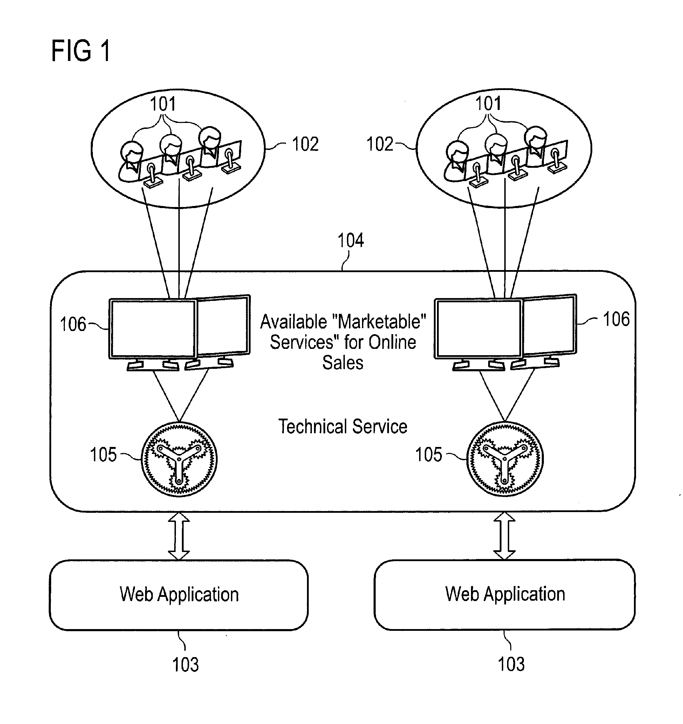

Figure 1 shows a possible view of a high level architecture for delivering SaaS applications. Different users 101 from two different organizations 102 subscribe to and use SaaS-enabled web applications 103 over a wide area network such as the Internet. The resources necessary to run the used web applications 103 are provided by a SaaS platform provider 104. For example, the platform provider 104 may operate a data center providing both centralized storage and processing capabilities. In order to provide the user with a requested service 106, the platform operator 104 runs technical services 105 implementing the respective web applications 103. For example, the technical services 104 may implement the business logic of the web application 103 in terms of computer program code provided by independent software vendors. In addition, the service 106 may be enriched with further information, such as pricing, licensing and other subscription data. To better distinguish the service 106 made available to the customer from the technical service 105 used for its implementation, the service 106 will also be referred to as "marketable service" throughout this specification.

While the architecture described above has many advantages, there are also a few disadvantages associated with it. For example, the centralized nature of the platform provider 104 makes it difficult, both on a technical as well as an economical level, to suit the needs of each individual user 102. For example, in the centralized model as described above with reference to Figure 1, it is difficult to flexibly change pricing models and other contractual details for users 101 of different organizations 102. Also, changes to services 106 offered by the platform provider will effect all users 101 of the system. For example, if a first user 101 of a first organization 102 requests changes to the service 106, it may inadvertently affect the users 101 of another organization 102.

It is therefore a challenge of the present invention to describe systems, devices and methods that allow the management of subscriptions for and provisioning of services, such as SaaS software components, in a more flexible way. In particular, system and methods should be described that isolate changes from different entities involved in a SaaS software delivery model.

### Brief Summary of the Invention

According to a first aspect of the present invention, a catalogue manager for managing subscriptions to services is disclosed. The catalog manager comprises at least one first database entry comprising data for a service description of a service to be offered and at least one first catalogue entry associating the first database entry with a set of services offered by a first link of a value chain. The catalog manager further comprises at least one second database entry comprising a modifiable copy of the data for the service description of the service to be offered, at least one reference associating the second and the first database entry, and at least one second catalogue entry associating the second database entry with a set of services offered by a second link of the value chain.

The provisioning of a second database entry for a service to be offered together with a reference to a first database entry regarding the same service and a second catalogue entry associating the second database entry with a second set of services to be offered by a second link of a value chain allows the more flexible provision of a service by means of different links of a value chain. For example, one service, such as the SaaS product may be offered on different marketplaces at different conditions through brokers and resellers.

In one embodiment, the database entries comprise fixed and variable attributes. Fixed attributes essentially comprise read-only values determined at the time the database entry is created. Variable attributes contain changeable values and can be set by a respective link of a value change at a later stage. The rights to access and/or modify such attributes can be controlled by means of a user or role based access control module.

In one embodiment, the first and second database entries comprise information on marketable services as provided by a supplier and reseller or broker. The first and second catalog entries associate the respective marketable services to different marketplaces of a seller and a reseller or broker.

Such a catalogue manager allows a first pricing information for subscribing to the marketable service on the first marketplace to be associated with the marketable service via the first catalogue entry. At the same time, the catalogue manager allows a second pricing information for subscribing the marketable service on the second marketplace to be associated with the marketable service via the second catalogue entry. The association of different pricing information allows a greater degree of flexibility regarding the subscription to the marketable service.

The first and second database entries may comprise a plurality of different attributes associated with the technical service provided by the marketable service and licensing information for the marketable services. Preferably, the catalogue manager enforces access restrictions to the information provided in the first and second database entry such that a reseller and the broker are prohibited from changing attributes related to the technical services implementation. However, a reseller may change other attributes related to licensing information. In contrast, a broker will typically be prohibited from changing licensing information as well.

The described catalogue manager according to the first aspect is particularly suitable for providing services in the form of Software as a Service products provided by a technology provider or a software supplier to an operator of the catalogue manager for subscription management, in particular to a platform provider.

According to a second aspect, a method for offering a service is described. The method comprises the steps of providing a first database entry comprising data for a service description of a service to be offered, the first database entry being associated with a first set of services offered by a first link of a value chain; copying the first database entry to create a second database entry, the second database entry being associated with a second set of services offered by a second link of the value chain; and creating at least one reference associated the second and the first database entries. By means of the method according to the second aspect, a service offering for a service may be provided by a different links of a value chain, such as supplier, sellers, resellers or brokers.

The service offering for the marketable service through the second link of the value chain may be revoked at a later stage by a first link of the value chain.

Furthermore, licensing and similar information for a marketable service may be updated by resellers of the software, for example to bundle individual marketable services together or to bundle marketable services with associated services such as support.

According to a third aspect, a method for subscribing to a marketable service is disclosed. The method comprises the steps of offering a service on a marketplace of at least one of a seller, a reseller and a broker; requesting a subscription to the offered service by a customer; copying a first database entry associated with the offered service and the marketplace to create a second database entry, the second database entry being associated with the subscription request of the customer; and creating at least one reference associating the second database entry and the first database entry. The method according to the third aspect is particularly suited for a service offered by means of a method according to the second aspect and/or managed by a catalogue manager according to the first aspect.

The generation of a copy of a first database entry associated with the offered service enables the creation of a subscriber copy, which essentially becomes independent of any later changes to the first database entry. In this way, the conditions for subscribing to the service as valid at the time of subscription can be preserved for each individual customer and associated subscription.

According to a fourth aspect, a non-transitive storage medium comprising a computer program is disclosed. When the computer program is executed on a processing system of at least server computer, it performs the following steps:
- receiving a permission for redistribution of a service associated with a first link of a value chain;
- copying a first database entry comprising data for a service description of the service stored in a database to create a second database entry, the second database entry being associated with a second link of a value chain; and
- creating at least one reference associated the second and the first database entries.

By means of the steps described above, a service already available at a first link of a value chain, such as on original seller, may be easily made available by a second link of a value chain, such as a reseller or a broker. At the same time, the copying of the respective database entry ensures a high degree of flexibility and integrity of the respective information stored for the first and second links of the value chains. At the same time, the creation of at least one reference associating the second and the first database entry ensures that the connection between the different links of the value chain and their corresponding database entries for the service is maintained to perform follow-up operations, such as service revocation etc.

According to a fifth aspect, a business method for selling Software as a Service product on a plurality of marketplaces is disclosed. The method comprises listing of at least one Software as a Service product provided by a supplier on a first marketplace of a seller, granting permissions to resell or broker the software as a service product by the supplier, copying information regarding the Software as a Service product from the first marketplace to the second marketplace, creating a reference from the copied information of the second marketplace to the original information of the first marketplace, and listing the Software as a Service product on the second marketplace based on the copied information of the second marketplace.

The described business method essentially enables the brokering and reselling of the Software as a Service products on a plurality of marketplaces.

The invention can be more fully appreciated based on the following exemplary embodiments, which are described with reference to Figures 2A to 11 attached.

### Brief Description of the Drawings

Figure 1 shows a system for providing a plurality of web applications to a plurality of users.
Figure 2A shows different distribution channels for marketable services to a customer.
Figure 2B shows a conceptual view of information stored for different entities of the distribution channel.
Figure 3 shows a schematic diagram of a catalogue manager for managing subscriptions to marketable services.
Figure 4 shows a data model for implementing a catalogue manager.
Figure 5 shows a collaboration diagram for the creation of a marketable service for a reseller or broker.
Figure 6 shows a collaboration diagram for the revocation of an already provided marketable service.
Figure 7 shows a collaboration diagram for the regranting of a previously revoked marketable service.
Figure 8 shows a collaboration diagram for the updating licensing conditions through a reseller.
Figure 9 shows a collaboration diagram for the deletion of a marketable service by a technology provider.
Figure 10 shows a collaboration diagram of the deletion of a marketable service by a supplier.
Figure 11 shows a collaboration diagram for the deactivation of a marketable service through a reseller.

### Detailed Description of the Invention

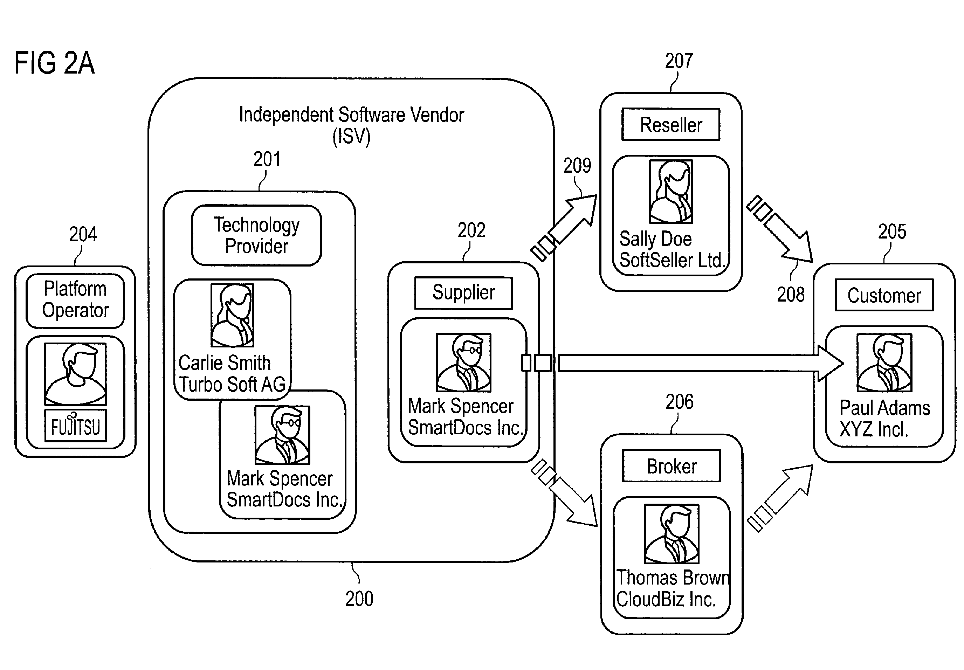

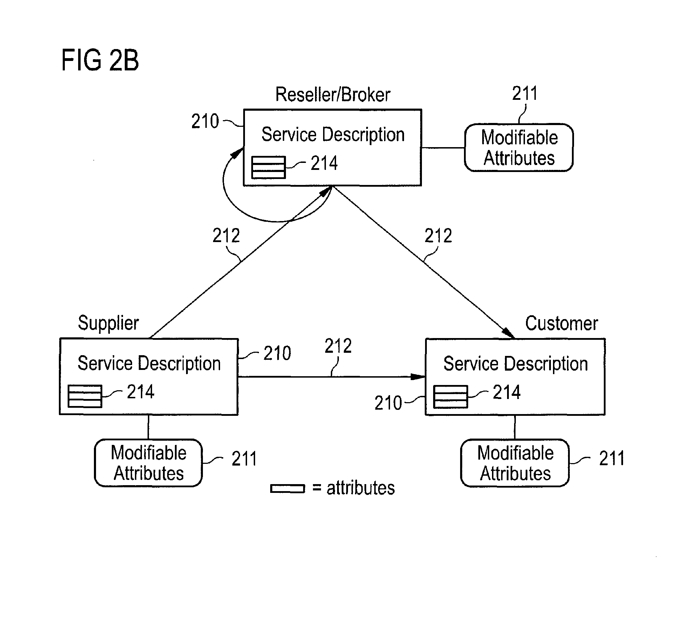

In the following, embodiments of systems, components and methods in accordance with various aspects of the present invention are described in detail with reference to Figures 2 to 11. Where appropriate, the same reference signs are used for similar entities of different embodiments. It should be noted that the description is not meant to limit the subject-matter as claimed in the attached claims.

Before the actual implementation of the various embodiments for managing subscription to services will be described in detail, first a general business model for marketing of services will be described with reference to Figure 2A. Figure 2A shows a simplified model of the relationships between the various entities involved in the provisioning, sale and use of services, such as SaaS offerings. In the model shown in Figure 2A, individual marketable service 106 offerings are created by so-called independent software vendors (ISV) 200. Internally, the group of independent software windows 200 can be further divided into a group of technology providers 201 and a group 202 of suppliers. Often, as shown in the example of Figure 2A, individual members 203 of the group of ISVs 200 belong to both the subgroup of technology providers 201 and the subgroup of suppliers 202. This is especially the case in the case of small software ISVs 200, that often provide the required technology, for example the executable program code, as well as the conditions for sale from within a single organization. However, especially in the case of larger software providers, the roles of technology providers 201 and suppliers 202 may also be provided by different legal entities.

The suppliers 202 may bundle their marketable services 106 together with or without resources for their execution. Such resources may be provided by a platform operator 204, may have a contract with the supplier 202 for offering the required resources, may provide a marketable service 106 of the supplier 202 in his behalf or may have a separate contract with a customer 205. However, it should be noted that, as shown in Figure 2A, the actual contractual relationship with a customer 204 typically exists between the supplier 202 and the customer 204. In this way, the supplier 202 and the customer 205 remain free to change the platform operator 204 without renegotiating contracts regarding the use of a service.

The scenario shown in Figure 2A also shows an additional sales channel for the software offerings provided by the supplier 202. In particular, according to the model shown in Figure 2A, a service as provided by member 203 of the suppliers 202 may also be sold by either a broker 206 or a reseller 207 to the customer 205. The differences between brokers 206 and resellers 207 are based on different contractual arrangements. Whereas the broker 206 merely acts as a sales agent for the supplier 202 to facilitate the contract between the supplier 202 and the customer 205, the reseller 207 will actually become the contracting partner of the customer 205 himself. As such, if a customer 205 chooses to subscribe to a service by means of a reseller 207, two contracts 208 and 209 are concluded, a first contract 208 between the customer 205 and the reseller 207 and a second contract 209 between the reseller 207 and the supplier 202.

It can be seen that the business scheme as outlined in Figure 2A enables a great degree of flexibility for both the supplier 202 as well as the customer 205 for subscribing to services, such as SaaS products. In particular, the customer 204 is not limited to a single supplier 202, but may choose a local broker 206 or a specialized reseller 207. In addition to the increased choice in general, specifically the reseller 207 may provide additional services not available directly from the supplier 202. For example, if the supplier 202 is a relatively small technology provider 201, he or she might not have the capability to provide extensive customer support to the customer 205. Therefore, reseller 207 may decide to bundle the technology provided by the supplier 202 with an extended service package, such as telephone support for a customer 205. The reseller 207 may also bundle a service offered by the supplier 202 with computing resources provided internally or an external platform operator 204.

The service model shown in Figure 2A also allows for an enhanced degree of flexibility with regard to pricing of the marketable service 106 subscribed to by the customer 205. For example, the suppler 202 may provide a fixed price scheme, where the supplier himself sets the percentage of revenue to be earned by the technology provider 201, the supplier 202, the broker 206 or reseller 207. However, the model shown in Figure 2A also allows individual members of the value change to define their own pricing model. For example, a reseller 207 may relinquish a part of revenue usually provided to a broker 206 in favour of bundling a marketable service 106 provided by the supplier 202 with further SaaS products, which will generate further revenue for the reseller 207. In any case, the customer 204 is free to shop around to obtain services in accordance with his needs at the best possible price available. In general, a more flexible value chain can be implemented by the model shown in Figure 2A.

In order to implement the distribution channel as shown in Figure 2A in an information technology system, a appropriate data model needs to be devised. Figure 2B shows a conceptual view of information stored for different entities along the distribution channel.

The information stored for each service is described as service description in the following, and may contain a large number of attributes associated with the service to be provided. For example, technical attributes specifying an access address for the service, non-technical attributes such as a reference to a used pricing model, a license contract or textual description of the service, as well as internal attributes, describing the relationships between the different entities of the data model may be provided. As can be seen in Figure 2B, rather than providing references between information stored with respect to a single service, a copy of a service description 210 is created for each respective entity, i.e. the supplier 202, the broker 206 or reseller 207 and the customer 205.

On thing to be noted is that some attributes of the service description 210 are fixed while others are modifiable, typically depending on a specific access control mechanism. Fixed attributes 214 are set at the time of creation of the service description, for example by manual provision through the first link of a multi-link value chain such as the supplier, or by copying from the service description 210 on a higher level of the value chain. Such information may provide technical information or legal information, such as a minimum sales price or identification of the technical provider 201. Modifiable attributes 211 may contain data regarding specific contractual arrangements offered in connection with the service, such as the price a reseller 207 sets for the service or the conditions for granting a license. As indicated in Figure 2, the modifiable attributes 211 can be stored in one or more separate entities, which are linked to the associated service description.

On further thing to be noted from Figure 2B is that, while each entity along a value chain holds its own copy of the service description 210, some operations of a subscription management system will require information from different levels of the value chain. For example a supplier 202 may only revoke its service if no reseller 207 or customer 205 is actively using the associated service any more. Similar, a customer may need to identify a change in technical information provided by the original supplier 202 irrespective of contractual changes as applied by a reseller 207. For this purpose, references 212 between the different copies of the service description 210 exist, maintaining the relationships between the different copies of the service description 210. As shown with respect to the brokers 206 and resellers 207, the use of references 212 also allows the creation of value chains of arbitrary length, e.g. a first broker 206 for a service bundled by a first reseller 207 based on services provided separately by a second broker 206 and a second reseller 207.

Yet another thing to be noted from Figure 2B is that, as each entity hold its own copy of the service description 210, its attribute values are preserved, even if a dependent entity changes a value in its own copy. For example, if reseller 207 changes a textual description and pricing of a service, subscriptions made by customers 205 before the change will remain unaffected. Thus, pricing information valid at a time of subscription will be maintained. Equally, licensing terms set by a supplier 202 for resale will be preserved in the reseller's copy of the service description 210 and not be affected by later changes in this policy.

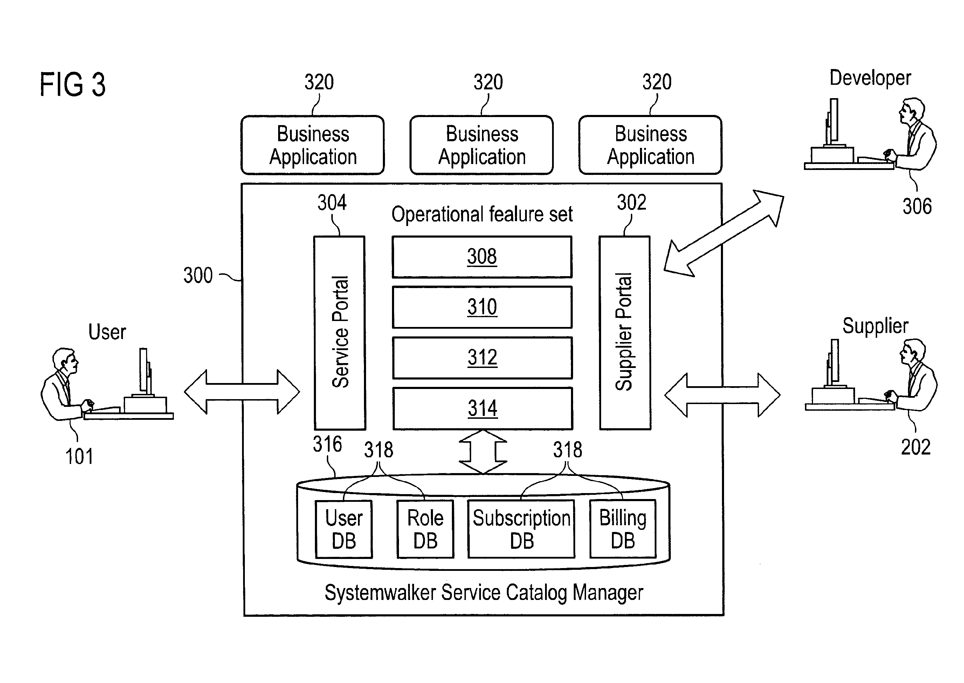

Next, an exemplary embodiment of a system for managing subscription together with a more refined data model for its implementation will be described. Figure 3 shows a schematic diagram of a catalogue manager that may be provided by a platform manager 204 to allow different suppliers 202 to offer marketable services 106. As an example, the system shown in Figure 3 is based on the so-called Fujitsu System Walker Server Catalogue Manager V15 as described in the datasheet available from www.fujitsu.com/systemwalker/.

The catalogue manager 300 according to Figure 3 provides a supplier portal 302 and a service portal 304. The supplier portal 302 allows suppliers 202 to provide and manage marketable services 106, such as SaaS products, via a centralized interface. Through the supplier portal 302, the supplier 202 can also gain a transparent insight into accounting information such as sales and use of the supplied marketable service 106.

The supplier portal 202 may also offer additional services to technology providers 201 such an individual developers 306. For example, a platform operator 204 may support the developer 306 in enabling conventionally a provider of a software application, such as so-called fat-client applications, or conventional client-server application for use in a cloud computing environment. For example, the supplier portal 302 may provide a number of interfaces for services provided by a middleware of the catalogue manager 300. In the exemplary embodiment shown in Figure 3, the middleware of the catalogue manager 300 provides, among others, a module 308 for user management, a module 310 for authentication and authorization of individual users 101, a tenant provisioning module 312 for providing different business applications 320 for different organizations 102 and a metering module 314 for metering the use of the business application 320 by individual users 101 or organizations 102. The information required for the operation of the various modules 308 to 314 are comprised in one or several databases 318 provided by a database system 316 as part of the catalogue manager 300. In the example shown, the database system 316 comprises different databases 318 for users, roles, subscriptions and billing information.

Individual users 101 and users 101 of larger organizations 102 can access the business applications 320 made available over the catalogue manager 300 by means of the service portal 304. In addition, privileged users 101 may also view the use of the provided business application 302 by other users of the same organizations and related billing information. For example, an IT administrator of a large organization 102 may manage and review the subscription of individual employees of that organization through the service portal 304.

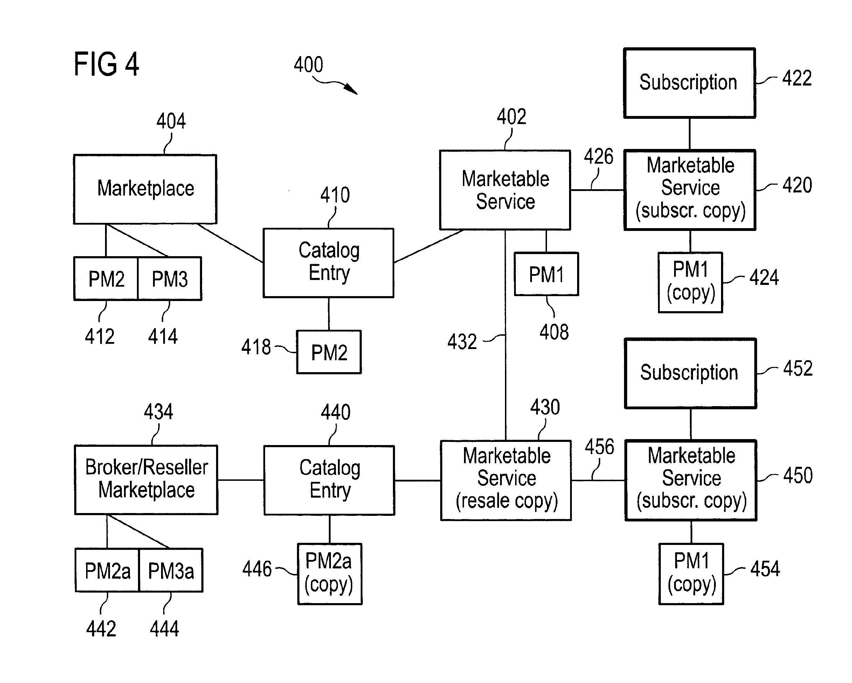

Figure 4 shows a data model as used by the catalogue manager 300 for managing subscription to marketable services 106 through a so-called marketplace 404. In the example given, the marketplace 404 is a web application provided directly by a platform provider 204 hosting both the service catalogue manager 300 as well as resources required to execute the marketable services 106. However, in practice these roles may be served by different organizational or legal entities. Furthermore, in this example, the platform provider 204 acts as a seller of the marketable service 106. However, a supplier 202 such as an ISV may also act as a seller for the marketable service 106 in a different constellation.

In the example described, the marketable service 106 essentially comprises a database entry, which links a technical service 105 identified by an URL or URI (uniform resource identifier or locator) of a SaaS product with a price model 408 provided by a supplier 202 to define usage prices for the technical service 105 provided. This information is stored in a database 318 of the catalogue manager 300 and, upon approval through the supplier 202, listed on a web interface of the marketplace 404. For this purpose, a further relation representing catalogue entries 410 is generated in the database 318 of the catalogue manager 300. Both the marketplace 404 as well as the catalogue 410 can have association with further price models 412, 414 and 416 relating, for example, to default revenue shares of a reseller 207, a broker 206, as well as a specific revenue share for the catalogue entry.

If a customer 205 now chooses to subscribe to the marketable service 106 offered through the marketplace 404 of the service seller, a copy of the database entry 402, referred to as subscriber copy 420, will be generated and stored in the database 318. In addition, a reference 426 between the subscriber copy 420 and the original database entry 402 is generated and stored in a database 318 of the catalogue manager 300. The subscriber copy 420 of the marketable service 106 essentially comprises the same information as the marketable service 106 at the time the subscription was made. Further information regarding the subscription 422 may be stored in a separate relation or database 318, for example billing information and customer information. Furthermore, the subscriber copy 420 of the marketable service 106 will be associated with a copy of the price model 424 that was valid at the stage the subscription was entered. The copying of the database entry 402 regarding the marketable service 106 into a subscriber copy 420 makes sure that the information valid at the time the subscription was made remains stored unchanged for each subscription 424. In particular, if a supplier 202 should later decide to change contractual details of the marketable service 106 or pricing information of the price model 408, these changes will not affect the subscriber copy 420 or the associated price model 424.

The data model 400 according to Figure 4 furthermore shows how the scheme described above with reference to the first marketplace 404 can be extended in a flexible manner to include further marketplaces, such as a marketplace 434 of a broker 206 or reseller 207 of marketable services 106.

If a supplier 202 chooses to make his marketable service 106 available by means of a reseller 207 or broker 206, a resale copy 430 of the database entry 402 of the marketable service 106 is created. The resale copy 430 essentially comprises the same information as the data entry 402 of the marketable service 106 at the time the permission for reselling of the marketable service 106 was granted by the supplier 202. In addition, a reference 432 between the resale copy 430 and the original database entry 402 is generated and stored in the database 318 of the catalogue manager 300. This helps to maintain the association between the resale copy 430 and the data entry 402 if the supplier 202 or the reseller 207 should decide to later change the service description stored in the database entry 402 or the resale copy 430, respectively.

One important detail that a reseller 207 may want to change in the resale copy 430 relates to the licensing terms offered to potential customers 205 over a marketplace 434 of the reseller 207. For example, a reseller 207 may decide to change the licensing conditions with regard to additional services provided by the reseller 207. Once the resale copy 430 reflects the service offering the reseller 207 would like to provide, he or she may enter the resale copy 430 in his actual marketplace 434 by generation of a further catalogue entry 440 which links the resale 430 to the marketplace 434. As described above with respect to the first catalogue entry 410 in the marketplace 404, the catalogue entry 440 and the marketplace 434 of the reseller 207 or broker 206 may have associated additional price models 442, 444 and/or 446 which initially reflect the corresponding price models 412, 414 and 416 at the time the resale copy 430 was created. However, according to contractual agreements between the original seller of the marketable service 106 and the reseller 207 of the marketable service 106 as represented in form of the resale copy 430, the reseller 207 may further adapt the associated price models 442, 444, 446.

If a customer 205 decides to subscribe to a marketable service 106 on the marketplace 434 of the broker or reseller by means of the resale copy 430, a further subscriber copy 450 of the resale copy 430 is generated for the customer 205. As described above, the subscriber copy 450 will contain the information as provided by the reseller 207 or broker 206 through the resale copy 430 at the time the subscription is made. In addition, by means of a reference 456, the subscriber copy 450 will be linked to the resale copy 430. In addition, the subscriber copy 450 may be linked with additional subscription information 452 as well a price model 454 as described above with respect to the subscriber copy 420 associated with the marketable service 106 directly.

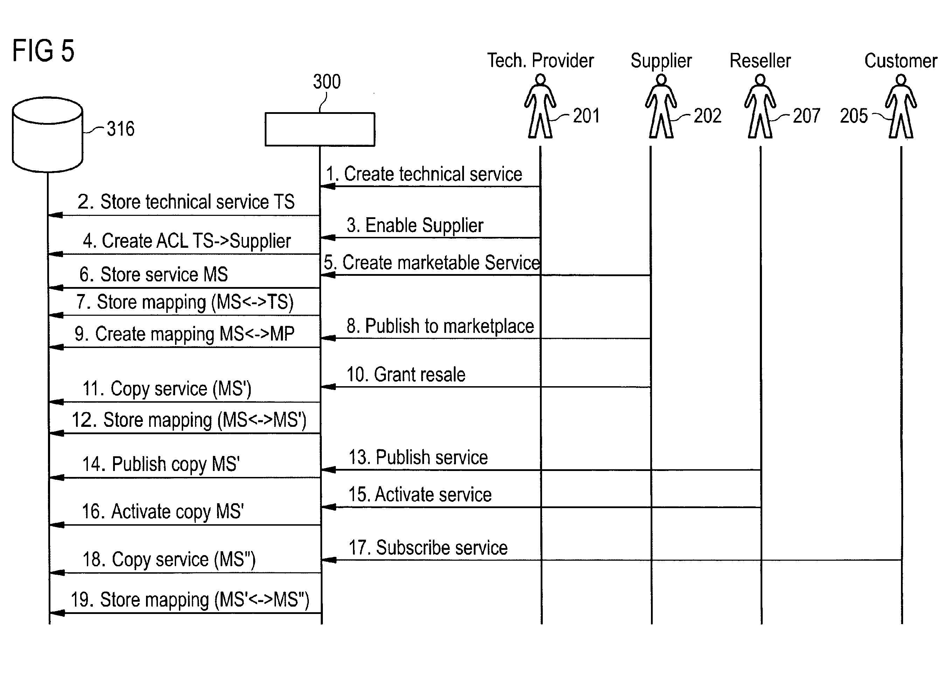

Figure 5 shows a collaboration diagram for a method of offering a marketable service 106 through a marketplace 434 of a reseller 207. In particular, Figure 5 shows the collaboration diagram between a technical provider 201, a supplier 202, a reseller 207 and a customer 205 with a catalogue manager 300 comprising a storage device in the form of a database system 316.

In a first step 502, the technical provider 201 creates a technical service 105, such as a SaaS-enabled business application 320, and provides the technical service 105 together with associated parameters for provisioning to the catalogue manager 300. In a subsequent step 504 the catalogue manager 300 stores technical parameters related to the technical service 105 in the database system 316 for later use. In a further step 506, the technical provider 201 enables one or several suppliers 202 to offer the provided technical service 105 through the marketplace 404 associated with the catalogue manager 300. For example, the technical provider 201 may select one or multiple suppliers 202 through a supplier portal 302 of the catalogue manager 300. Accordingly, in a step 508, an access control list (ACL) is created in the database system 318, which enables the selected supplier 202 to access the technical service 105 provided.

In a step 510 one of the enabled suppliers 202 creates a marketable service 106 based on the technical service 105 provided in step 502. For example the supplier 202 defines a licensing contract for the specified technical service 105 based on a default contract and pricing model. Furthermore, the supplier 202 may change one or several associated terms and conditions to create a marketable service 106 through the supplier portal 302. In a subsequent step 312 the created marketable service 106 is stored in the form of a first database entry 402 in the database system 316. Furthermore, in a subsequent step 514, a mapping between the created database entry 402 for the marketable service 106 and the technical service 105 provided by the technical provider 201 is stored in the database 318. At this stage, the sufficient information for identifying the marketable service 106 based on the technical service 105 are available in the catalogue manager 300. However, in the exemplary system described, the created service offering is not automatically included in set of services provided via the marketplace 404. For this purpose, in a further step 516, the supplier 202 actively publishes the created marketable service 106 on the marketplace 404. In a subsequent step 418, a corresponding mapping in the form of a catalog entry 410 is generated by the catalogue manager and stored in the database system 316. From this point onwards, the created service is available for subscriptions via the marketplace 404. However, in the described implementation, the catalog entry 410 will remain "inactive", until it as manually activated by the supplier.

Irrespective of the activation of the catalog entry 410, in a further step 520, the supplier 202 grants additional rights for the created marketable service 106 to be sold on one or several other marketplaces. For example, a corresponding attribute for allowing reselling and/or brokering may be provided over the supplier portal 302 to the catalogue manager 300. As a consequence, the catalogue manager 300 copies in a step 522 the original data entry for the marketable service 106 to create a reseller copy 430 for each enabled reseller marketplace 434. Initially, the reseller copy 430 will contain the same information as the data entry 402 regarding the marketable service 106. In addition, the catalogue manager 300 automatically creates a mapping in form of a reference 432 between the first data entry 402 regarding the marketable service 106 and the reseller copy 430 and stores this cross-reference in the database system 316 in a step 524. As detailed before, only individually authorized resellers 207 or all resellers 207 may be granted the resale permissions in step 520. Such restrictions may be provided via the supplier portal 302 and stored in the form of another access control list in the database system 316.

A reseller 207 authorized to resell the marketable service 106 created in step 510 may then select and publish the resale copy 430 of the marketable service 106 in a step 530. As a consequence, a mapping between the resale copy 530 and the marketplace associated with the reseller 207, for example the marketplace 434 may be created. Correspondingly, a catalogue entry 440 may be created and stored in the database system 316. While the step 532 makes the resale copy 530 generally available on the second marketplace 434, it will not be visible to customers on a web interface before the reseller 207 specifically activates the resale copy 430 or corresponding catalogue entry 440 in a further step 534. In response thereto, the catalogue manager 300 will mark the catalogue entry 440 as "active" in the database 318 in step of 536. After completion of step 536, now two database entries 402 and 430 exist in the database system 316 regarding the technical service 105 provided by the technical provider 201 in step 502.

In the exemplary flow of Figure 5, a customer 205 subscribes in a step 530 to the resale copy 430 via the service portal 304 of the catalogue manager 300. In response thereto, the catalogue manager 300 creates a subscriber copy 450 of the marketable service 106 in a step 542. The subscriber copy 450 essentially documents the state of the reseller copy 430 related to the marketable service 106 at the time the customer 205 subscribed to the service. Preferably, the subscriber copy 450 is protected from any changes other than changes regarding details of the customer 205 or the termination of the subscription. To maintain a link between the subscriber copy 450 and the resale copy 430 of the marketable service 106, in a step 544 a further reference 456 between the subscriber copy 420 and the resale copy 530 is created by the catalogue manager 300 and stored in the database system 316.

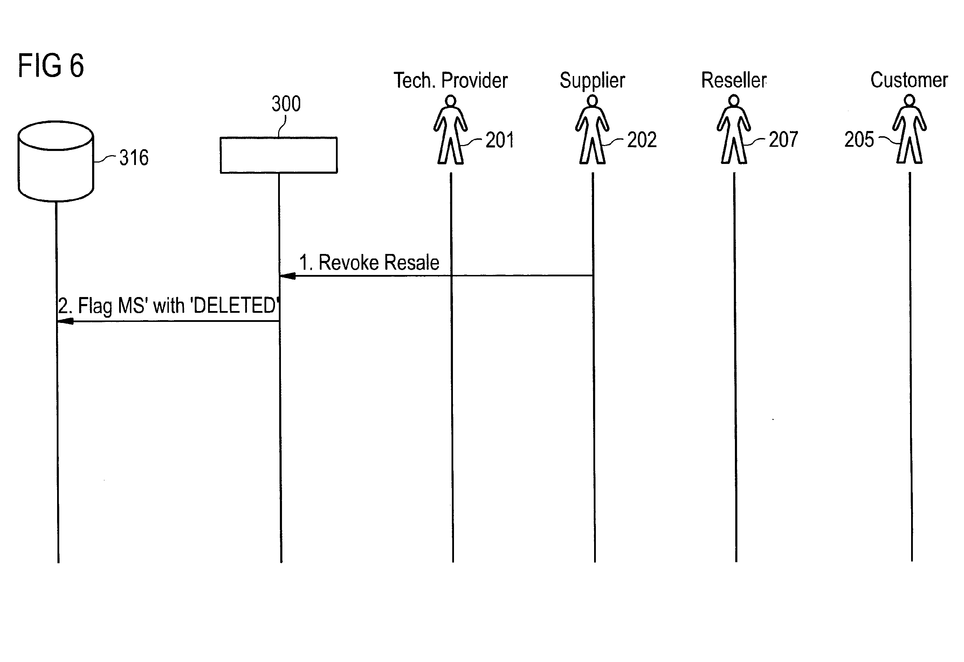

In the following, further collaboration diagrams are briefly explained with references to Figures 6 to 11. In this context attention is drawn to the fact that only operations effected by the potential existence of a resale copy 430 of a database entry relating to a marketable service 106 are described. Other operations and further details of the specific operations to be performed are left out in order to allow a comprehensive description of the functionality of the catalogue manager with respect to the management for support of reseller and/or broker operations.

Figure 6 shows relevant steps of a method for revoking the right to resell a marketable service 106 through a supplier 202. It is worth noting that the revocation of such a right to resell will only act for the future. In particular, subscriptions already entered by a customer 205 with a reseller 207 should remain unaffected. Therefore, in response to a revocation request received in step 602 through the supplier portal 302 of catalogue manager 300, the already existing resale copy 430 is maintained in the database 318. However, the resale copy 430 is marked with a corresponding status such as "deleted" or "revoked" in order to indicate to the catalogue manager 300 that no new subscriber copies 450 may be generated based on the inactive resale copy 430.

Furthermore, as no subscriber copy 450 may be generated based on resale copy 430, the catalogue manager 300 removes the service offering from offerings visible on the marketplace 434 of the reseller 207.

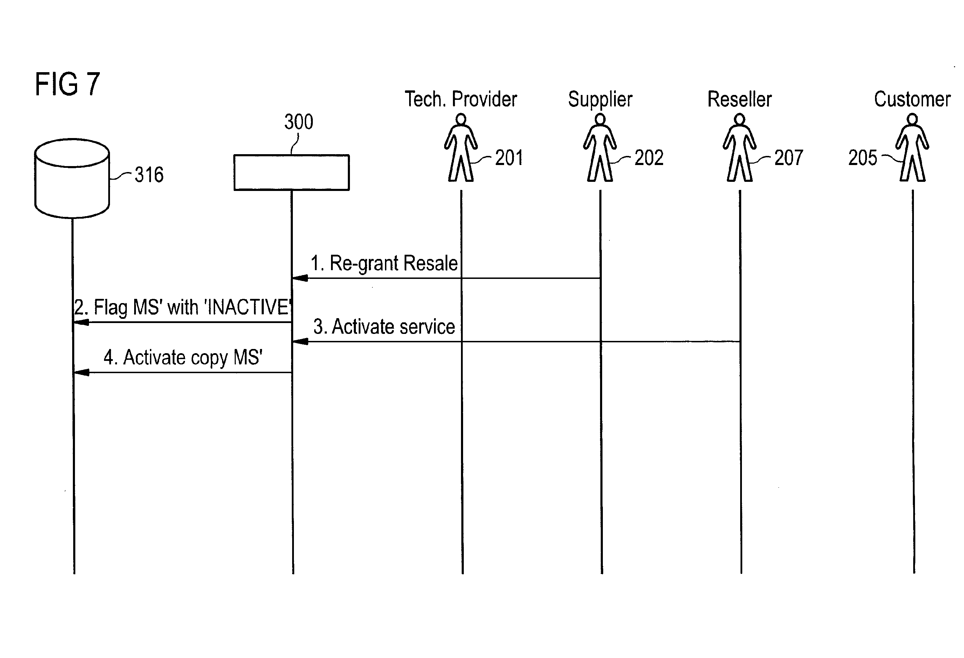

Figure 7 shows a corresponding regranting of resale rights through the supplier 202. In a first step 702, the supplier 202 issues a new right to reselling to the catalogue manager 300. In response, in a step 704, the catalogue manager 300 changes the status of the resale copy 430 from the previously "deleted" or "revoked" state to an "inactive" state. Subsequently, the reseller 207 may re-activate the resale copy 430 in a further step 710 via the supplier portal 302. Consequently, the catalogue manager 300 will activate the resale copy 430 for subscriptions. Once the resale copy has been marked as "active" it will be visible in the marketplace 434 of the reseller 207 and may be used to create further subscriber copies 450.

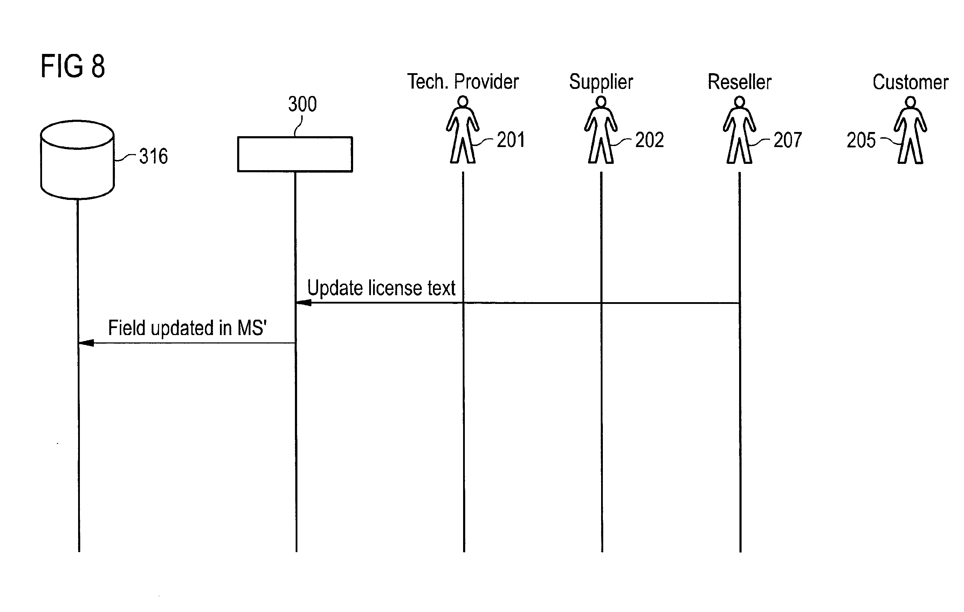

Figure 8 shows a method for updating details of the resale copy 430 through the reseller 207. In a step 802, the reseller 207 provides updated information regarding the service offering. For example, an updating licensing text detailing the usage rights and obligations of a customer 205 may be defined by the reseller 207. The catalogue manager 300 checks whether the reseller 207 is authorized to change the resale copy 430. For example, while resellers 207 are authorized to change the license agreement associated with the marketable service 106, a broker 206 is usually not allowed to change the license conditions. These and other restrictions may be implemented directly in the schema of the database system 318, the control logic of the catalogue manager 300 or provided in form of access control lists. In case the reseller 207 is authorized to perform the requested update, in a step 804 an updated version of the resale copy 430 is stored in the database system 316.

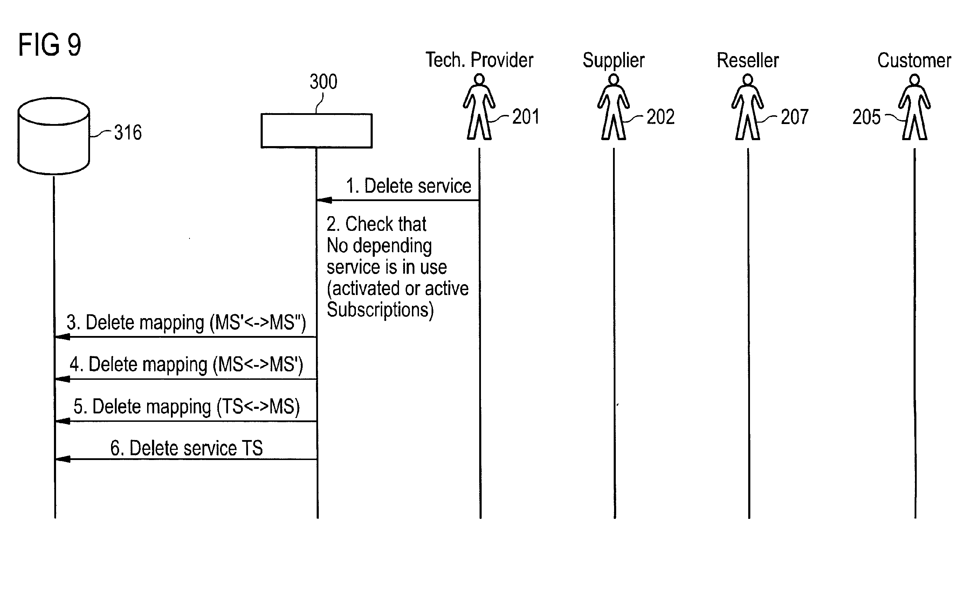

Figure 9 shows a method for deletion of a technical service 105 by the technical provider 201. In a first step 902, the technical provider 201 requests deletion of the service 105 originally provided in step 502. In response, the catalogue manager 300 checks whether no depending services are in use. For example, the catalogue manager 300 may check whether a marketable service 106 or a resale copy 430 is actively listed in any of the marketplaces 404 and 434. Furthermore, the catalogue manager 300 may check whether any active subscriber copies 420 or 450 are stored in the database 318. Only if all database entries relating to the technical service 105 provided by the technical provider 201 are marked as "deleted", "inactive" or "revoked", the corresponding mappings in the database system 316 with relating to the technical service 105 are deleted in steps 904, 906 and 910. In particular, in step 904 the mapping between any subscriber copy 450 and associated resale 430 is deleted while in step 906 a mapping between any resale copy 430 and original marketable service 106 are deleted. In step 910 the mapping between the marketable service 106 and the technical service 105 is deleted before in a concluding step 912 the information regarding the technical service itself is deleted from the database system 918.

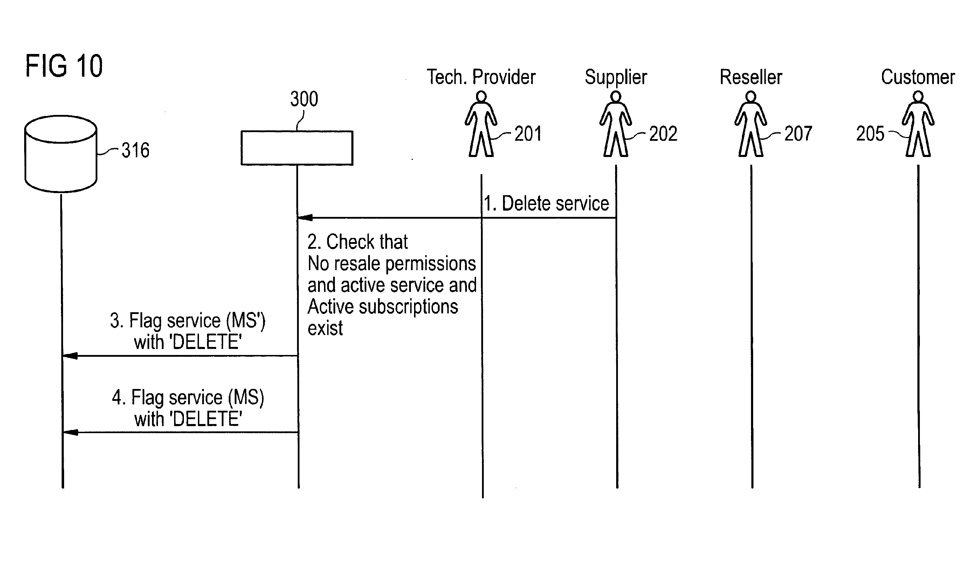

Figure 10 shows a collaboration diagram for a method for deleting a marketable service 106 by a supplier 202. In a first step 1002, a deletion request is provided by the supplier 202 through the supplier portal 302 to the catalogue manager 300. Correspondingly, the catalogue manager 300 checks that no active resale permissions or active listings of the provided marketable service 106 and active subscriptions of customers 205 exist for the corresponding marketable service 106. If any such relations exist with respect to the marketable service 106 to be deleted, the request received in step 1002 will return an error message. Otherwise, in subsequent steps 1004 and 1006, the resale copy 430 as well as the database entry 402 referring to the marketable service 106 will be marked as "deleted" in the database system 316. Note that such "deleted" database entries are physically deleted, but may be reactivated in the described embodiment.

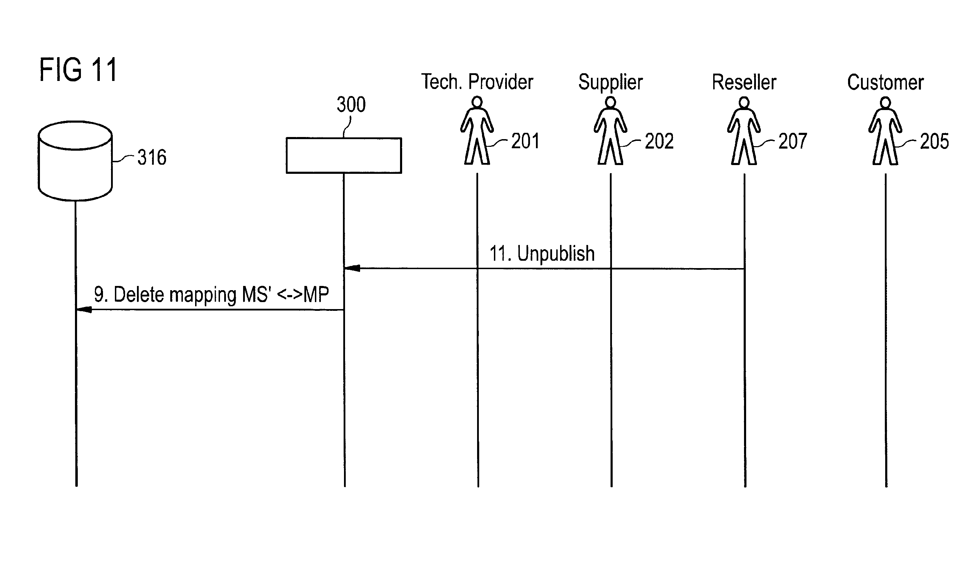

Figure 11 shows a method for hiding a reseller copy 430 from a marketplace 434 of a reseller 207. For this purpose, in a step 1102, a corresponding unpublish request is received via the supplier portal 302. As the reseller 207 is free to remove his service offering at any stage without permissions from the supplier 202 or technical supplier 201, the catalogue manager 300 can immediately delete or mark as "deleted" the corresponding mapping between the resale copy 430 and the marketplace 434 in the database 318 in a step 1104.

The described data model, systems and methods allow the implementation of a flexible system for offering subscription to services, such as SaaS business applications along different entities of a value chain.

In particular provision of a resale copy 430 for each reseller 207 and broker 206 or other entity of a value chain entitled to offer a marketable service 106 allows the flexible generation and change of a service description.

Furthermore, operations of such entities are restricted to their respective copies of database entries and therefore do not alter information contained in other copies related to an offered service and related information, such as price models defining the revenue shares as defined by the original seller of a marketable service 106. In addition, the provision of subscriber copies 420 and 450 and resale copies 430 preserves the conditions as applicable to the corresponding service at the time an agreement regarding the individual service was reached between the parties involved.

The provision of individual copies for each subscriber and reseller also allows the distribution of the system to multiple platforms or platform providers 104 and/or database systems 316. Only such operations affecting all copies, such as the removal of a technical service through a technical provider 201 need to be performed across all platforms. Other operations, which only affect a local resale copy, may be performed by a remote system without further interaction with a master database entry 402 or dependent subscriber copies 420 and 450 of the marketable service 106.

## Claims

1. A catalogue manager for managing subscriptions to services, comprising:
- at least one first database entry comprising data for a service description of a service to be offered;
- at least one first catalogue entry associating the first database entry with a set of services offered by a first link of a value chain;
- at least one second database entry comprising a modifiable copy of the data for the service description of the service to be offered;
- at least one reference associating the second and the first database entry; and
- at least one second catalogue entry associating the second database entry with a set of services offered by a second link of the value chain.

2. The catalogue manager according to claim 1, wherein the first and second database entries each comprise at least one fixed first attribute, the first attribute containing a read-only value set at the time the respective database entry was created; and at least one variable second attribute, the second attribute containing a changeable value that can be set by the respective link of the value chain after the respective database entry has been created.

3. The catalogue manager according to claim 1 or 2, further comprising
- a portal for accessing information stored in at least the first database entry, the second database entry, the first catalog entry and the second catalog entry;
- an authentication module for authenticating an identity and/or a role of a user of the catalog manager accessing the portal; and
- an access control module, permitting or prohibiting changes to information of the first database entry, the second database entry, the first catalog entry and the second catalog entry based on a user and/or role specific access control list.

4. The catalogue manager according to one of claims 1 to 3,
wherein
- the at least one first database entry comprises data on a marketable service provided by a supplier of the marketable service;
- the at least one first catalogue entry associates the first database entry with a first marketplace of a seller of the marketable service;
- the at least one second database entry comprises data on the marketable service modified by a broker or reseller of the marketable service; and
- the at least one second catalogue entry associates the second database entry with a second marketplace of the broker or the reseller of the marketable service, respectively.

5. The catalogue manager according to claim 4, wherein:
- the first and second database entries each comprise at least one fixed first attribute, the first attribute containing data regarding a technical service to be provided by the marketable service, and at least one variable second attribute, the second attribute containing data regarding licensing information for the marketable service;
- the catalogue manager is adapted to permit changes to the second attribute of the first database entry by the seller only, to permit changes to the second attribute of the second database entry by the reseller only, and to prohibit changes to the first attribute of the second database entry by any one of the seller, broker and reseller.

6. The catalogue manager according to claim 4 or 5, further comprising:
- first pricing information for subscribing to the marketable service on the first marketplace, wherein the first pricing information is associated with the marketable service via the first catalogue entry;
- second pricing information for subscribing to the marketable service on the second marketplace, wherein the second pricing information is associated with the marketable service via the second catalogue entry.

7. The catalogue manager according to one of claims 1 to 6, wherein the at least one service to be offered comprises a Software as a Service provided by a technology provider or software supplier to an operator of the catalog manager for subscription management.

8. A method for offering a service, the method comprising:
- providing a first database entry comprising data for a service description of a service to be offered, the first database entry being associated with a first set of services offered by a first link of a value chain;
- copying the first database entry to create a second database entry, the second database entry being associated with a second set of services offered by a second link of the value chain; and
- creating at least one reference associated the second and the first database entries.

9. The method according to claim 8, wherein:
- before the first database entry is copied, a supplier of the service is granting a permission for subscribing to the service via the second link of the value chain; and
- after the first database entry is copied, the second link of the value chain activates the second database entry for subscription.

10. The method according claim 9, further comprising:
- revoking the permission for subscribing to the service via the second link of the value chain; and
- flagging the second database entry as deleted or revoked.

11. The method according to any one of claims 8 to 10,
wherein the first database entry is associated with a first marketplace of a seller by means of a first catalogue entry, the method further comprising:
- creating at second catalogue entry associating the second database entry with a second marketplace of a broker or the reseller of the marketable service.

12. The method according to claim 11, further comprising:
- requesting deletion of the marketable service from the first marketplace;
- checking, whether any active subscriptions to the marketable service exist in the first or second marketplace by means of the reference associating the first and the second database entries; and
- if no active subscriptions exist in the first and second marketplace flagging the first and second database entries as deleted, otherwise refusing the requested deletion.

13. The method according to claim 11 or 12, further comprising:
- modifying the second database entry by the reseller, in particular modifying at least one of a service description, a service price and a service license contract; and
- publishing the marketable service using the modified second database entry on the second marketplace.

14. The method according claim 13, further comprising:
- concurrently publishing the marketable service using the unmodified first database entry on the first marketplace.

15. A method for subscribing to a service, in particular a service offered using a method according to one of claims 8 to 14, comprising:
- offering a service on a marketplace of at least one of a seller, a reseller and a broker;
- requesting a subscription to the offered service by a customer;
- copying a first database entry associated with the offered service and the marketplace to create a second database entry, the second database entry being associated with the subscription request of the customer; and
- creating at least one reference associating the second database entry and the first database entry.

16. A non-transitive storage medium comprising a computer program that, when executed on a processing system of at least one server computer, performs the following steps:
- receiving a permission for redistribution of a service associated with a first link of a value chain;
- copying a first database entry comprising data for a service description of the service stored in a database to create a second database entry, the second database entry being associated with a second link of a value chain; and
- creating at least one reference associated the second and the first database entries.

17. A business method for selling Software as a Service products on a plurality of marketplaces, the method comprising:
- listing at least one Software as a Service product provided by a supplier on a first marketplace of a seller;
- granting permission to resell or broker the Software as a Service product by the supplier;
- copying information regarding the Software as a Service product from the first marketplace to the second marketplace;
- creating a reference from the copied information of the second marketplace to the original information of the first marketplace; and
- listing the Software as a Service product on the second marketplace based on the copied information of the second marketplace.

18. The business method according to claim 17, wherein a reseller is given permission to modify contract related information contained in the copied information regarding the Software as a Service product and a broker is denied permission to modify contract related information contained in the copied information regarding the Software as a Service product.

19. The business method according to claim 17 or 18, wherein a reseller is given permission to combine the Software as a Service product with other services, in particular a support package for the Software as a Service Product, resources for executing the Software as a Service Product and/or a further Software as a Service product.
